(19) **Europäisches Patentamt**

**European Patent Office**

**Office européen des brevets**

(11) **EP 0 718 026 B1**

(12) **EUROPEAN PATENT SPECIFICATION**

(45) Date of publication and mention
of the grant of the patent:
**26.08.1998  Bulletin 1998/35**

(51) Int. Cl.$^6$: **B01D 53/86**,  C01B 17/04

(21) Application number: **94203757.3**

(22) Date of filing: **23.12.1994**

(54) **Removing hydrogen sulphide from a gas stream**

Entfernung von Schwefelwasserstoff aus einem Gasstrom

Elimination de sulfure d'hydrogène d'un courant gazeux

(84) Designated Contracting States:
**DE FR IT NL**

(43) Date of publication of application:
**26.06.1996  Bulletin 1996/26**

(73) Proprietor:
**SHELL INTERNATIONALE RESEARCH
MAATSCHAPPIJ B.V.
2596 HR  Den Haag (NL)**

(72) Inventors:
  • **Stegenga, Sander
    NL-1031 CM  Amsterdam (NL)**

  • **Demmers, Anthonius Maria
    NL-1031 CM  Amsterdam (NL)**

(56) References cited:
**EP-A- 0 242 006        EP-A- 0 631 978
WO-A-92/02449        US-A- 4 406 873**

<u>Remarks:</u>
The file contains technical information submitted
after the application was filed and not included in
this specification

Printed by Xerox (UK) Business Services
2.16.3/3.4

## Description

The present invention relates to a process of removing hydrogen sulphide from a gas stream. An example of such a gas stream is a natural gas.

In WO 92/02 449 is described a process for removing hydrogen sulphide from a gas stream, which process comprises contacting the gas stream at a temperature above the dew point of elemental sulphur in the presence of free oxygen with catalytic material in a first catalytic reactor to obtain a partly purified gas stream and contacting the partly purified gas stream at a temperature between the dew point of water and the dew point of elemental sulphur with catalytic material in a second catalytic reactor to obtain a purified gas stream.

In the known process air is supplied to the gas stream upstream of the first catalytic reactor. Free oxygen in the air oxidizes hydrogen sulphide directly to elemental sulphur according to the reaction:

$$H_2S + 1/2\ O_2 \rightarrow H_2O + 1/x\ S_x.$$

Although the publication is silent about the amount of free oxygen supplied to the first catalytic reactor, this amount is in general stoichiometric or slightly super-stoichiometric. That is to say the ratio between the concentrations of oxygen and hydrogen sulphide is 0.5, the stoichiometric ratio, or more; the unit of this ratio being mol/mol, or vol/vol at standard pressure and temperature. In the specification and in the claims the ratio between the concentrations of oxygen and hydrogen sulphide will be called the "oxygen-hydrogen sulphide ratio".

Applicant now proposes to contact a gas stream with catalytic material in a first catalytic reactor at a temperature which is between the dew point of water and the dew point of elemental sulphur so that elemental sulphur is adsorbed on the catalytic material in the first catalytic reactor. The first catalytic reactor is used for bulk removal of hydrogen sulphide and the second catalytic reactor is used for removing traces of hydrogen sulphide from the gas leaving the first catalytic reactor.

In the process of the present invention the first catalytic reactor is used to remove the bulk of the hydrogen sulphide from the gas stream, therefore the largest part of the elemental sulphur formed is adsorbed on the catalytic material in this catalytic reactor. The adsorbed elemental sulphur improves the activity of the catalytic material. However, when the amount of elemental sulphur adsorbed on the catalytic material is above a certain level, the conversion of hydrogen sulphide starts to decrease and it decreases with the amount of sulphur adsorbed on the catalytic material. Consequently a higher amount of hydrogen sulphide leaves the first catalytic reactor. In order to reduce the slip of hydrogen sulphide, the catalytic material in the first catalytic reactor has to be regenerated even before the $H_2S$-conversion has dropped to below a predetermined level. The time between two successive regenerations is thus determined by the time it takes to reach in the first catalytic reactor a sulphur-loading at which the $H_2S$-conversion has dropped to below a predetermined level.

It is an object of the present invention to increase the cycle time.

To this end the process of removing hydrogen sulphide from a gas stream according to the invention comprises contacting the gas stream in the presence of free oxygen in two catalytic reactors with catalytic material to obtain elemental sulphur which is deposited on the catalytic material and a purified gas stream, wherein the gas stream is contacted in the first catalytic reactor with catalytic material to obtain a partly purified gas stream, which partly purified gas stream is contacted in the second catalytic reactor in the presence of additional free oxygen with catalytic material at a temperature in the range of from the dew point of water to the dew point of elemental sulphur to obtain the purified gas stream, characterised in that in the first catalytic reactor the contacting takes place in the presence of a sub-stoichiometric amount of free oxygen at a temperature in the range of from the dew point of water to the dew point of elemental sulphur.

The invention is based on the discovery that the sulphur-loading of the catalytic material at which $H_2S$-conversion decreases depends on the oxygen-hydrogen sulphide ratio. When this ratio is larger than or equal to 0.5 the initial $H_2S$-conversion is in general between 95 and 100%, however, the sulphur-loading of the catalytic material at which the $H_2S$-conversion starts to decrease is less than 40%. When the oxygen-hydrogen sulphide ratio is less than 0.5 the $H_2S$-conversion is less than 95%, however, it was found that the sulphur-loading of the catalytic material at which the $H_2S$-conversion starts to decrease is about twice the sulphur-loading at which the $H_2S$-conversion starts to decrease when the oxygen-hydrogen sulphide ratio is 0.5 or more. This effect is shown in the following example.

Three experiments were carried out to determine the $H_2S$-conversion as a function of the sulphur-loading of the catalytic material. In the experiments a nitrogen stream saturated with water had been used to simulate a methane stream saturated with water. The nitrogen stream further contained 1 vol% $H_2S$, 1 vol% $CO_2$, 200 ppmv (parts per million by volume) COS and free oxygen. The amount of free oxygen was so selected that the oxygen-hydrogen sulphide ratio was 0.6, 0.45 and 0.27. The stoichiometric ratio of $[O_2]$ to $[H_2S]$ is 0.5. The catalytic material used was an activated alumina catalyst (A201 from La Roche). The pressure was 10 bar, the temperature was 150 °C, and the gas hourly space velocity was 2 000 vol/vol/hour. In Table 1 the results of the experiments are shown in the form of the initial $H_2S$-

conversion and the sulphur loading of the catalyst at which the conversion starts to decrease as a function of the oxygen-hydrogen sulphide ratio. The initial $H_2S$-conversion is defined as $1-[H_2S]_{out}/[H_2S]_{in}$, wherein $[H_2S]_{in}$ is the concentration of hydrogen sulphide in the gas stream entering into the catalytic reactor and $[H_2S]_{out}$ is the concentration of hydrogen sulphide in the gas stream leaving the catalytic reactor. The sulphur-loading of the catalyst is expressed in kg sulphur per kg catalyst.

Table 1

| Result of the experiments. | | |
| --- | --- | --- |
| $[O_2]/[H_2S]$ | Initial $H_2S$-conversion | Sulphur-loading |
| 0.6 | 1.0 | 0.30 |
| 0.45 | 0.9 | 0.70 |
| 0.27 | 0.5 | 0.75 |

Suitably the oxygen-hydrogen sulphide ratio in the process according to the invention in the gas stream entering into the first catalytic reactor is in the range of from 0.40 to 0.49 and more suitably in the range of from 0.45 to 0.49.

The second catalytic reactor is used to remove traces of hydrogen sulphide, and to this end the partly purified gas stream is contacted in the second catalytic reactor with catalytic material in the presence of additional free oxygen. The amount of additional free oxygen is so selected that together with the initial amount of hydrogen sulphide present in the gas stream the total amount of oxygen is equal to or larger than the stoichiometric amount.

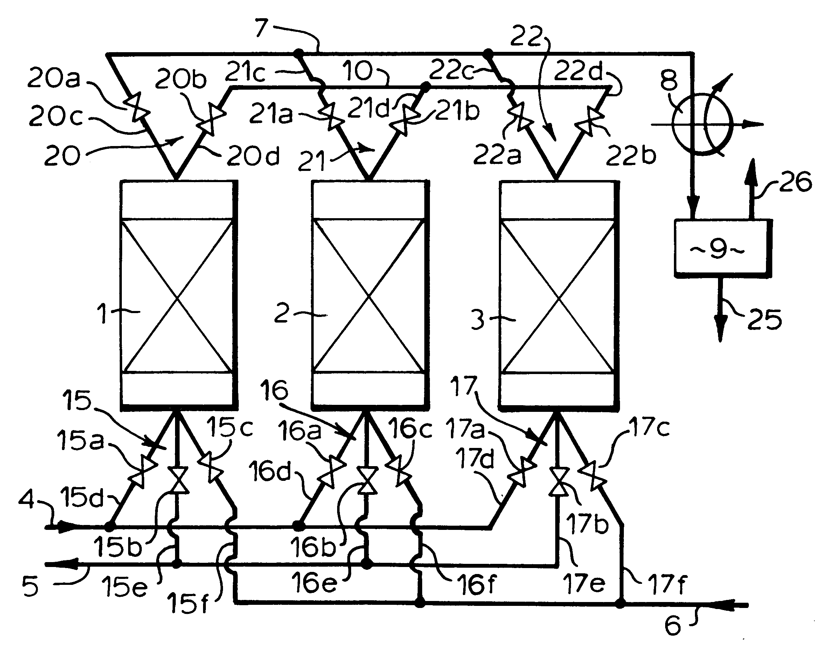

The invention will now be described by way of example in more detail with reference to the accompanying drawing showing schematically the device for carrying out the process according to the present invention.

The device comprises three reactors containing catalytic material referred to with reference numerals 1, 2 and 3, a feed supply conduit 4, an outlet conduit for purified gas 5, a supply conduit for regeneration gas 6, an outlet conduit for sulphur-containing gas 7, a condensor 8, a storage tank for sulphur 9, and a connecting conduit 10.

Each catalytic reactor 1, 2 and 3 has a lower manifold referred to with reference numerals 15, 16 and 17. The lower manifold 15 includes valves 15a, 15b and 15c in conduits 15d, 15e and 15f, the lower manifold 16 includes valves 16a, 16b and 16c in conduits 16d, 16e and 16f, and the lower manifold 17 includes valves 17a, 17b and 17c in conduits 17d, 17e and 17f. Conduits 15d, 16d and 17d are connected to the feed supply conduit 4, conduits 15e, 16e and 17e are connected to the outlet conduit for purified gas 5, and conduits 15f, 16f and 17f are connected to the supply conduit for regeneration gas 6.

Furthermore each catalytic reactor 1, 2 and 3 has an upper manifold referred to with reference numerals 20, 21 and 22. The upper manifold 20 includes valves 20a and 20b in conduits 20c and 20d, the upper manifold 21 includes valves 21a and 21b in conduits 21c and 21d, and the upper manifold 22 includes valves 22a and 22b in conduits 22c and 22d. Conduits 20c, 21c and 22c are connected to the outlet conduit for sulphur-containing gas 7, and conduits 20d, 21d and 22d are connected to connecting conduit 10.

During normal operation a gas stream including hydrogen sulphide and a sub-stoichiometric amount of free oxygen is supplied through the feed supply conduit 4 through conduit 15d into catalytic reactor 1 for bulk removal of hydrogen sulphide. A first purified gas having a reduced hydrogen sulphide content is removed from the first catalytic reactor 1 through conduit 20d and it is supplied via the connecting conduit 10 to the second catalytic reactor 2 for trace removal of hydrogen sulphide. Additional free oxygen is supplied to the second catalytic reactor 2 via a separate supply conduit (not shown). Totally purified gas is removed from the second catalytic reactor 2 through conduit 16e, and it is removed for further use through the outlet conduit for purified gas 5.

Simultaneously the catalytic material in catalytic reactor 3 is being regenerated, to this end hot regeneration gas is supplied through the supply conduit for regeneration gas 6 via conduit 17f into catalytic reactor 3. The temperature of the hot gas is above the dew point of elemental sulphur. Regeneration gas loaded with sulphur from the catalytic material in catalytic reactor 3 is removed from the catalytic reactor 3 through conduit 22c and supplied through the outlet conduit for sulphur-containing gas 7 to the condensor 8 where elemental sulphur is condensed. The condensed sulphur is stored in storage tank 9 from which it can be removed via outlet conduit 25, and sulphur-free gas is removed from the storage tank 9 via outlet conduit 26.

In this first phase catalytic reactor 1 is used for bulk removal of hydrogen sulphide, catalytic reactor 2 for trace removal and the catalytic material in catalytic reactor 3 is being regenerated.

The position of the valves in the first phase is given in Table 2.

When the catalytic material in catalytic reactor 1 is loaded to a such a level that the conversion starts to decrease, the catalytic material in catalytic reactor 1 is regenerated, bulk removal of hydrogen sulphide is now done in catalytic reactor 2 and trace removal is done in catalytic reactor 3 of which the catalytic material had been regenerated in the first phase. To properly direct the flow some valves have to opened and other valves have to be closed, the position of the valves in this second phase is given in Table 2. Additional free oxygen is supplied to the third catalytic reactor 3 via a separate supply conduit (not shown).

When the catalytic material in catalytic reactor 2 is loaded to a such a level that the conversion starts to decrease, the catalytic material in catalytic reactor 2 is regenerated, bulk removal of hydrogen sulphide is now done in catalytic reactor 3 and trace removal is done in catalytic reactor 1 of which the catalytic material had been regenerated in the second phase. Additional free oxygen is supplied to the first catalytic reactor 1 via a separate supply conduit (not shown). To properly direct the flow some valves have to opened and other valves have to be closed, the position of the valves in this third phase is given in Table 2.

Subsequently the process is continued with the first phase.

Table 2

| | | 15 | | | 20 | | 16 | | | 21 | | 17 | | | 22 | |
|---|---|---|---|---|---|---|---|---|---|---|---|---|---|---|---|---|
| Position of the valves, "op" means open and "cl" means closed. | | | | | | | | | | | | | | | | |
| | a | b | c | a | b | a | b | c | a | b | a | b | c | a | b |
| phase I | op | cl | cl | cl | op | cl | op | cl | cl | op | cl | cl | op | op | cl |
| phase II | cl | cl | op | op | cl | op | cl | cl | cl | op | cl | op | cl | cl | op |
| phase III | cl | op | cl | cl | op | cl | cl | op | op | cl | op | cl | cl | cl | op |

The below hypothetical example of the first phase further illustrates the present invention. Catalytic reactors 1, 2 and 3 are filled with 66.8 $m^3$ catalytic material in the form of activated alumina particles having a particle size of 4 mm.

A feed consisting of natural gas with 1.0 vol% $H_2S$, 100 ppmv (parts per million by volume) COS, 1 vol% $CO_2$ and 0.48 vol% of $O_2$ is passed at a pressure of 60 bar and a temperature of 100 °C into the first catalytic reactor 1 through conduit 15d. The flow rate is 170 000 $Nm^3$/h (standard cubic meter per hour). The gas hourly space velocity in the reactor is 2 500 vol/vol/hour. In the first catalytic reactor 1 95% of the $H_2S$ is converted to elemental sulphur which is adsorbed on the catalyst particles. The catalyst particles are loaded to 75 wt% in 16.6 hours, at which moment the second phase starts.

Because the reaction is exothermic first purified gas leaves the first catalytic reactor 1 at a temperature of 150 °C, this gas is supplied with an additional amount of 250 ppmv $O_2$ into the second catalytic reactor 2 through conduit 21d, and purified gas leaves reactor 2 at about the same temperature. The hydrogen sulphide concentration in the purified gas is less than 30 ppmv $H_2S$, and the amount of elemental sulphur in the purified gas is less than 3 ppmv.

Catalyst particles in the third catalytic reactor 3 are regenerated by passing gas at a pressure of 60 bar and at a temperature of 400 °C through the third catalytic reactor 3. For a gas flow rate of 28 129 $Nm^3$/h regeneration of the catalyst particles takes about 13 hours. The regeneration gas is suitably a side stream of the purified gas leaving the second catalytic reactor 2. The sulphur-free gas leaving the storage tank for sulphur 9 through conduit 26 can be added to the purified gas in conduit 5.

## Claims

1. Process for removing hydrogen sulphide from a gas stream comprising contacting the gas stream in the presence of free oxygen in two catalytic reactors with catalytic material to obtain elemental sulphur which is deposited on the catalytic material and a purified gas stream, wherein the gas stream is contacted in the first catalytic reactor with catalytic material to obtain a partly purified gas stream, which partly purified gas stream is contacted in the second catalytic reactor in the presence of additional free oxygen with catalytic material at a temperature in the range of from the dew point of water to the dew point of elemental sulphur to obtain the purified gas stream, characterised in that in the first catalytic reactor the contacting takes place in the presence of a sub-stoichiometric amount of free oxygen at a temperature in the range of from the dew point of water to the dew point of elemental sulphur.

2. Process as claimed in claim 1, characterised in that the gas stream is contacted in the first catalytic reactor with catalytic material in the presence of a such an amount of free oxygen that the oxygen-hydrogen sulphide ratio is in the range of from 0.40 to 0.49.

**Patentansprüche**

1. Verfahren zum Abtrennen von Schwefelwasserstoff aus einem Gasstrom, umfassend das Inberührungbringen des Gasstroms in Gegenwart von freiem Sauerstoff in zwei katalytischen Reaktoren mit katalytischem Material, um elementaren, auf dem katalytischen Material abgelagerten Schwefel und einen gereinigten Gasstrom zu erhalten, in welchem Verfahren der Gasstrom im ersten katalytischen Reaktor mit katalytischem Material in Berührung gebracht wird, um einen partiell gereinigten Gasstrom zu erhalten, welcher partiell gereinigte Gasstrom im zweiten katalytischen Reaktor in Gegenwart von zusätzlichem freiem Sauerstoff mit katalytischem Material bei einer Temperatur im Bereich vom Taupunkt von Wasser bis zum Taupunkt von elementarem Schwefel in Berührung gebracht wird, um den gereinigten Gasstrom zu erhalten, dadurch gekennzeichnet, daß im ersten katalytischen Reaktor das Inberührungbringen in Gegenwart einer substöchiometrischen Menge von freiem Sauerstoff bei einer Temperatur im Bereich vom Taupunkt von Wasser bis zum Taupunkt von elementarem Schwefel stattfindet.

2. Verfahren nach Anspruch 1, dadurch gekennzeichnet, daß der Gasstrom im ersten katalytischen Reaktor mit katalytischem Material in Gegenwart einer solchen Menge an freiem Sauerstoff in Berührung gebracht wird, daß das Sauerstoff-Schwefelwasserstoff-Verhältnis im Bereich von 0,40 bis 0,49 liegt.

**Revendications**

1. Procédé d'élimination du sulfure d'hydrogène d'un courant de gaz, qui comprend la mise en contact du courant de gaz en présence d'oxygène libre dans deux réacteurs catalytiques avec une matière catalytique pour obtenir du soufre élémentaire qui est déposé sur la matière catalytique et un courant de gaz purifié, où le courant de gaz est mis en contact dans le premier réacteur catalytique avec une matière catalytique pour obtenir un courant de gaz partiellement purifié, lequel courant de gaz partiellement purifié est mis en contact dans le second réacteur catalytique, en présence d'oxygène libre supplémentaire avec de la matière catalytique à une température qui se situe dans la plage allant du point de rosée de l'eau au point de rosée du soufre élémentaire pour obtenir un courant de gaz purifié, caractérisé en ce que, dans le premier réacteur catalytique, la mise en contact a lieu en présence d'une quantité sub-stoechiométrique d'oxygène libre à une température qui se situe dans la plage allant du point de rosée de l'eau au point de rosée du soufre élémentaire.

2. Procédé suivant la revendication 1, caractérisé en ce que l'on met le courant de gaz en contact dans le premier réacteur catalytique avec de la matière catalytique en présence d'une quantité d'oxygène libre telle que le rapport oxygène-sulfure d'hydrogène se situe dans la plage de 0,40 à 0,49.